# EUROPEAN PATENT SPECIFICATION

(11) **EP 1 065 144 B1**
(45) Date of publication and mention of the grant of the patent: **30.08.2006**
(21) Application number: 00202339.8
(22) Date of filing: 03.07.2000
(51) Int. Cl.: B65B 25/06

(54) **Method for packaging mussels and similar shellfish, and thus obtained package with shellfish**
Verfahren zum Verpacken von Muscheln oder ähnlichen Schalentieren, und dabei erzeugte Verpackung
Procédé pour emballer des moules et crustacés similaires et emballage obtenu

(30) Priority: 02.07.1999 NL 1012495
(43) Date of publication of application: 03.01.2001
(73) Proprietor: Roem van Yerseke B.V., 4400 AA Yerseke (NL)
(72) Inventor: Vos, Frank Abraham, 4381 WE Vlissingen (NL); Nijhof, Mark, 9974 PB Zoutkamp (NL)
(74) Representative: Prins, Adrianus Willem

(56) References cited:
- EP-A- 0 720 954
- EP-A- 0 880 899

## Description

The invention relates to a method for packaging mussels and similar shellfish, according to the preamble of claim 1. Such method is known from EP-A-0 880 899.

EP-A-0 880 899 discloses a method for packaging mussels and similar shellfish, comprising the introduction of an amount of living shellfish into a leakproof container. A supply of a protective gas atmosphere to the container is provided, after which the container is sealed, in order to prevent leakage and maintain the freshness of the shellfish for an extended period of time.

From EP-A 0 720 954 a method and package are known in which an amount of mussels is introduced into a container, after which pressure is exerted on the mussels to keep them in closed condition. The container may be an open net, but mention is also made of a variant in which the container is airtight. In that case the pressure in the container, says the publication, must be superatmospheric and sufficient oxygen must be added to allow the mussels to function aerobically. In this variant, therefore, the supply of a protective gas atmosphere is involved.

Searches for a method for packaging living mussels such that a leakproof package is obtained in which the mussels remain alive as long as possible have already been made before. The problem arising in this connection is that in the leakage fluid originating from the mussels bacterial growth may occur, with the result that when opening the package unpleasant odors are noticed, and otherwise, too, the shelf life of the mussels is negatively influenced, certainly when the leakage fluid is situated around at least part of the mussels. Attempts have been made to solve this problem by using a package which provides a separation of mussels and leakage fluid.. Examples thereof can be found in Netherlands patent applications 80.00159, 81.02651, 94.00391 and 94.01832. However, when keeping mussels and leakage fluid separated, undesirable bacterial growth developing in the leakage fluid is not prevented. Moreover, the packages with provisions for keeping mussels and leakage fluid separated are often laborious and thus expensive, and further environmentally harmful.

The disadvantages of higher cost and environmental impact seem to be removed with the package described in Netherlands patent 10.05991. As far as can be understood from this publication, that package comprises mussels under a gas atmosphere which additionally contains O₂ and CO₂. This manner of packaging is based on the bacteriostatic effect of CO₂ and the chemical bond (oxidation) of chemical decay products (so-called TVB bond). Because, however, CO₂ is highly soluble in water (the leakage fluid), such a gas atmosphere gives a strong apparent vacuum. At a higher concentration of the CO₂. this can lead to a strong deformation of the packaging material, which can effect leakage. Besides, an unduly high concentration of CO₂ can lead to acidification of the mussels. Furthermore, an unduly high concentration of carbonic acid gas can give an increased drip as a result of cell membrane damage. For this reason carbonic acid gas percentages of less than 50 are used in practice. This, however, does not provide an optimum preservation, with the result that the prolongation of shelf life is little to nil. From the literature it is known that, if the package allows this, a gas composition with 70 vol.% CO₂ is recommended.

The invention has for its object to provide a method in which the disadvantages of an expensive package with separation of mussels and leakage fluid and of a non-optimum shelf life as a result of deformation do not appear. This object is achieved with a method, characterized by the features of claims 1.

According to the invention undesirable bacterial growth in a package is counteracted in two ways. First of all, a preservative is introduced into the container, which preservative ensures that in the leakage fluid bacterial growth occurs less or does not occur at all. Besides, such a gas atmosphere is used that a delay of the metabolism of the shellfish is effected. This inhibits the development of waste products, which can otherwise enter the leakage fluid in which it promotes bacterial growth.

According to the invention a protective gas atmosphere is used which contains up to 80 vol.% oxygen. It is true that every increase in the oxygen content above the normal 20.8 vol.% present in air already leads to a slower metabolism, but the delay increases at higher concentrations. A maximum of 80% oxygen must be maintained in connection with explosion hazard.

According to the invention the preservative used is a liquid preservative. An amount of 5 - 15 ml per kg product in the package is normally sufficient. Very suitable as a preservative is a mixture of salts, acids and preservatives. The preservative medium inhibits the development of bacteria, which reduces the formation of excretion products with sulfur compounds. As a result, the shelf life of the shellfish is prolonged considerably.

A preservative that has been found suitable according to the invention is an agent containing NaCl and an acid buffer selected from citric acid citrate and lactic acid lactate. Preferably, the pH value of that preservative is greater than 2 and less than 5, and the salt content is at least 3.2% and at most 7.5%.

## Claims

1. A method for packaging mussels and similar shellfish, comprising the introduction of an amount of living shellfish into a leakproof container, the supply of a protective gas atmosphere to the container, and the leakproof sealing of the container, wherein a protective gas atmosphere is used, which delays the formation of waste products in the shellfish, **characterized in that** moreover a preservative is introduced into the container which preservative is a liquid preservative, whereas a protective gas atmosphere is used comprising an amount of O₂ between 20.8 vol% and 80% for delaying the metabolism of the shellfish

2. A method according to claim 1, **characterized in that** the preservative used is an agent containing NaCl and an acid buffer selected from citric acid citrate and lactic acid lactate, the pH value of the preservative is adjusted to a value of 2 - 5, and that the salt content is adjusted to 3.2 - 7.5%, and that 5 - 15 ml preservative per kg product in the package is added.

3. A method according to claim 1 or 2, **characterized in that** the protective gas atmosphere is supplied such that after sealing the container a reduced pressure exists therein.

4. A package with shellfish, obtainable by the method according to any one of claims 1-3, comprising a liquid preservative.

## Patentansprüche

1. Verfahren zum Verpacken von Muscheln und ähnlichen Schalentieren, das umfasst: das Einbringen einer Menge lebender Schalentiere in einen lecksicheren Behälter, das Zuführen einer Schutzgasatmosphäre in den Behälter und das lecksichere Abdichten des Behälters, wobei eine Schutzgasatmosphäre verwendet wird, welche das Entstehen von Abbauprodukten in den Schalentieren verzögert, **dadurch gekennzeichnet, dass** darüber hinaus ein Konservierungsmittel in den Behälter eingebracht wird, wobei das Konservierungsmittel ein flüssiges Konservierungsmittel ist, während eine Schutzgasatmosphäre verwendet wird, die eine Menge von O₂ zwischen 20,8 Vol.- % und 89 Vol.-% zum Verzögern des Stoffwechsels der Schalentiere enthält.

2. Verfahren nach Anspruch 1, **dadurch gekennzeichnet, dass** das verwendete Konservierungsmittel ein Wirkstoff ist, der NaCl und eine saure Pufferlösung enthält, die aus Zitronensäurezitrat und Michsäurelaktat ausgewählt ist, wobei der pH-Wert des Konservierungsmittels auf einen Wert von 2 - 5 eingestellt ist und der Salzgehalt auf 3,2 - 7,5 % eingestellt ist und in der Packung 5 - 15 ml Konservierungsmittel pro kg Produkt hinzugefügt sind.

3. Verfahren nach Anspruch 1 oder 2, **dadurch gekennzeichnet, dass** die Schutzgasatmosphäre derart zugeführt wird, dass nach dem Abdichten des Behälters in diesem ein verringerter Druck vorliegt.

4. Packung mit Schalentieren mit einem flüssigen Konservierungsmittel, welche durch das Verfahren nach einem der Ansprüche 1 - 3 erhalten werden kann.

## Revendications

1. Procédé pour emballer des moules et des crustacés similaires, comprenant l'introduction d'une certaine quantité de crustacés vivants dans un récipient hermétique, la fourniture d'une atmosphère de gaz protecteur dans le récipient et la fermeture hermétique du récipient, dans lequel une atmosphère de gaz protecteur est utilisée qui retarde la formation de produits décomposés dans les crustacés, **caractérisé en ce que**, en outre, un conservateur est introduit dans le récipient, conservateur qui est un conservateur liquide, alors qu'une atmosphère de gaz protecteur est utilisée comprenant une certaine quantité de O₂ comprise entre 20,8 % en volume et 80 % pour retarder le métabolisme des crustacés.

2. Procédé selon la revendication 1, **caractérisé en ce que** le conservateur utilisé est un agent contenant du NaCl et un tampon acide choisi parmi un citrate d'acide citrique et un lactate d'acide lactique, la valeur de pH du conservateur est ajustée à une valeur de 2 - 5 et **en ce que** la teneur en sel est ajustée à 3,2 - 7,5 % et ce que 5 - 15 ml de conservateur par kg de produit dans l'emballage sont ajoutés.

3. Procédé selon la revendication 1 ou 2, **caractérisé en ce que** l'atmosphère de gaz protecteur est fournie de telle sorte, qu'après la fermeture hermétique du récipient, une pression réduite règne dans celui-ci.

4. Emballage pour crustacés, susceptible d'être obtenu par le procédé selon l'une quelconque des revendications 1 à 3, comprenant un conservateur liquide.
